(19) Europäisches Patentamt
European Patent Office
Office européen des brevets

(11) Numéro de publication: **0 043 307**
**B1**

(12) **FASCICULE DE BREVET EUROPEEN**

(45) Date de publication du fascicule du brevet: **23.11.83**

(51) Int. Cl.³: **C 07 C 121/46**, C 07 C 69/74, A 01 N 53/00

(21) Numéro de dépôt: **81400981.7**

(22) Date de dépôt: **18.06.81**

(54) **Dérivés cyclopropane-1-carboxyliques et leurs sels, préparation et application à la synthèse d'intermédiaires de pyréthrinoides cis.**

(30) Priorité: **20.06.80 FR 8013734**

(43) Date de publication de la demande: **06.01.82 Bulletin 82/1**

(45) Mention de la délivrance du brevet: **23.11.83 Bulletin 83/47**

(84) Etats contractants désignés: **AT BE CH DE GB IT LI LU NL SE**

(56) Documents cités: **FR - A - 2 353 515**

(73) Titulaire: **ROUSSEL-UCLAF, 35, boulevard des Invalides, F-75007 Paris (FR)**

(72) Inventeur: **Jullien Renée, 20, rue Fernand Forest, F-91120-Palaiseau (FR)**
Inventeur: **Benayache, Samir, 114, rue Larbi Ben Mhidi, Al-Constantine (DZ)**

(74) Mandataire: **Tonnellier, Marie-José et al, ROUSSEL-UCLAF 111, route de Noisy Boîte Postale no.9, F-93230 Romainville (FR)**

EP 0 043 307 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

# Dérivés cyclopropane-1-carboxyliques et leurs sels, préparation et application à la synthèse d'intermédiaires de pyréthrinoïdes cis

La présente invention a pour objet de nouveaux dérivés de l'acide cyclopropane-1-carboxylique et leurs sels, leur procédé de préparation et leur application à la synthèse d'intermédiaires dans la préparation de composés pyréthrinoïdes de configuration cis.

On connaissait déjà, par le brevet français No 2353515, des esters d'alcoyles dérivés d'acide 2,2-dialcoyl-3-cyano-3-alcoxycarbonylcyclopropane-1-carboxylique, utilisables pour préparer d'autres esters doués de propriétés pesticides après hydrolyse de l'ester en position 1, puis estérification par un alcool approprié.

La présente invention a pour objet des acides 2,2-diméthyl-3-alcoxycarbonyl-1-cyanocyclopropane-1-carboxyliques et leurs sels alcalins. Ces derniers, par décarboxylation stéréosélective sur le sommet également porteur du groupement cyano dans des conditions originales, conduisent à des esters d'alcoyle d'acides cyclopropane-carboxyliques de configuration cis, eux-mêmes utilisables pour préparer d'autres esters doués de propriétés pesticides.

L'invention a ainsi pour objet les nouveaux dérivés de l'acide cyclopropane-1-carboxylique de formule (I):

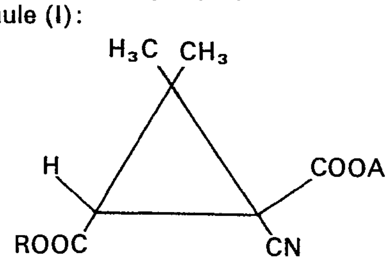

(I)

dans laquelle les groupements CN et COOR sont en position cis, A représente un atome d'hydrogène ou un atome de métal alcalin, et R représente un radical alcoyle renfermant de 1 à 4 atomes de carbone.

Parmi les valeurs de A, on peut citer notamment les atomes de sodium, de potassium ou de lithium.

Parmi les valeurs de R, on peut citer notamment les radicaux méthyle, éthyle, propyle et butyle.

Parmi les dérivés de formule (I), l'invention a notamment pour objet l'acide 2,2-diméthyl-3-éthoxycarbonyl-1-cyanocyclopropane-1-carboxylique dans lequel les groupements cyano et éthoxycarbonyl sont en positions cis, et ses sels de sodium et de potassium.

L'invention a également pour objet un procédé de préparation des dérivés de formule (I), tels que définis ci-dessus, caractérisé en ce que l'on soumet un dérivé de formule (II):

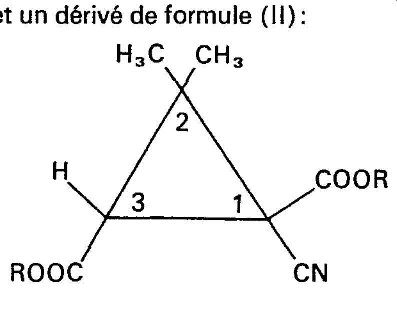

(II)

dans laquelle les groupements COOR sur le sommet 3 et CN sur le sommet 1 sont en position cis et R est tel que défini ci-dessus, à l'action d'un agent de saponification alcalin, en milieu hydroalcoolique, pour obtenir un dérivé de formule (I) dans laquelle A représente un atome de métal alcalin, que l'on soumet, le cas échéant, à l'action d'un agent acide, pour obtenir un dérivé répondant à la formule (I), dans laquelle A représente un atome d'hydrogène, que l'on salifie, le cas échéant, par action d'une base alcaline, pour obtenir un dérivé répondant à la formule (I) dans laquelle A représente un atome de métal alcalin.

Dans des conditions préférentielles d'exécution du procédé de l'invention,

– l'agent de saponification est choisi dans le groupe constitué par la soude et la potasse;

– l'on opère en milieu hydroéthanolique ou hydrométhanolique.

L'agent acide utilisé dans le procédé de l'invention peut être un acide fort usuel quelconque.

Le procédé de l'invention présente un caractère inattendu par la sélectivité de la saponification effectuée. En effet il n'était pas du tout évident, à priori, qu'une saponification, n'affectant que le gorupement ester porté par le même carbone que le groupement CN, était possible lorsqu'un second groupement ester était présent sur la molécule. Or, à la mise en œuvre du procédé de l'invention, aucune trace de saponification du second groupement ester n'a pu être décelée.

Les dérivés de formule (I) peuvent être utilisés pour préparer des composés intermédiaires connus. Une telle application est décrite ci-après, conduisant aux produits de formule (III). Ces produits de formule (III) permettent d'accéder à des esters de type pyréthrinoïdes, possédant d'intéressantes propriétés, notamment insecticides. (Voir par exemple la demande de brevet japonais No 77.566 A/43.)

La présente invention a ainsi également pour objet l'application des dérivés de formule (I) à la préparation des dérivés de formule (III):

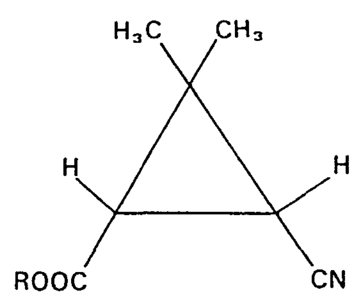

(III)

de configuration cis, dans laquelle R représente un radical alcoyle renfermant de 1 à 4 atomes de carbone, caractérisée en ce que l'on chauffe un dérivé de formule (I):

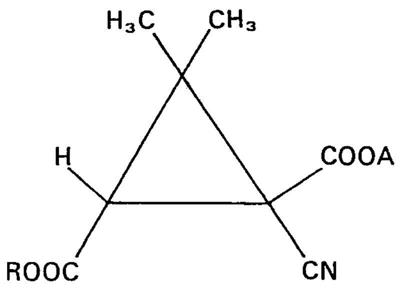

(I)

dans laquelle A représente un atome de métal alcalin, au sein d'un solvant aprotique, à une température de 100 à 150° C, en présence de 1 à 4 mol d'eau par mole de dérivé de formule (I), pour obtenir un dérivé de formule (III), de configuration cis, attendu.

L'invention a notamment pour objet une application telle que définie précédemment, caractérisée en ce que A présente un atome de sodium ou de potassium.

Dans des conditions préférentielles d'exécution du procédé objet de l'application ci-dessus:

– le solvant aprotique est choisi dans le groupe constitué par le diméthylformamide, le diméthylsulfoxyde et le diméthylacétamide,

– le chauffage est effectué à une température de 120 à 140° C,

– le chauffage est effectué pendant une durée de 2 à 6 h.

Il est évident que l'invention s'étend à un procédé de préparation des dérivés de formule (III), tel que défini précédemment, caractérisé en ce que l'on utilise au départ un dérivé de formule (I), dans laquelle A représente un atome de sodium ou de potassium, obtenu directement à l'issue de la saponification par la soude ou la potasse du dérivé de formule (II), telle que définie précédemment. Ce procédé permet d'éviter l'isolement de l'acide de formule (I) en traitant directement le sel de sodium ou de potassium issu de la saponification comme décrit dans l'application.

La décarboxylation d'esters cyclopropaniques était connue (voir par exemple les brevets français Nos 2281919, 2355811 ou encore 2371415). Les procédés connus concernent des composés cyclopropaniques différents de ceux de la présente invention et font en général appel à un processus de chauffage en présence de quantités catalytiques d'halogénures métalliques ou de cyanures métalliques. Ces procédés n'utilisent jamais au départ un sel alcalin du composé que l'on souhaite décarboxyler.

De plus, les procédés connus ou bien ne fournissent aucune indication quant à la configuration des composés obtenus, ou bien précisent que ces composés sont des mélanges d'isomères cis et trans. En aucun cas ces procédés ne sont stéréospécifiques.

Le procédé de l'invention présente le grand avantage de conduire à un composé renfermant jusqu'à 94% d'isomère cis cherché. Il est donc particulièrement avantageux par rapport aux procédés connus mentionnés ci-dessus, quand on sait l'importance de la configuration de ces composés.

On peut ajouter que le procédé de l'invention permet d'éviter la formation de produits de dégradation issus notamment de l'ouverture de cycle cyclopropanique, ce qui est particulièrement à redouter, étant donné les conditions opératoires. Le procédé de l'invention conduit aux composés attendus avec un rendement de décarboxylation qui atteint 98% et un rendement global (saponification + décarboxylation) qui atteint 88%.

Les composés de formule (II) utilisés au départ du procédé de l'invention sont connus et décrits dans le brevet des Etats-Unis No 3397223 ou peuvent être obtenus par le procédé décrit dans ce brevet.

Les exemples suivants illustrent l'invention sans toutefois la limiter.

*Exemple 1:*

*Acide 2,2-diméthyl-3-éthoxycarbonyl-1-cyanocyclopropane-1-carboxylique.*

On maintient sous agitation et sous atmosphère inerte pendant 15 h un mélange de 2 g de 2,2-diméthyl-3-éthoxycarbonyl-1-cyanocyclopropane-1-carboxylate d'éthyle (obtenu selon le procédé décrit dans le brevet des Etats-Unis No 3397223) et 4,71 g de potasse éthanolique à 10%. On chasse ensuite l'éthanol sous pression réduite, lave le résidu à l'éther, le reprend à nouveau à l'éther, acidifie à pH 3 par addition d'acide sulfurique dilué, décante, lave la phase éthérée à l'eau, sèche et évapore le solvant. On obtient 1,6 g de produit attendu. F≃130° C (décomposition).

*Spectre RMN* $[(CD_3)_2CO]$

– Pics à 1,29 ppm (triplet, 3H, J = 7 Hz).
– Pic à 1,37 ppm (singulet, 3H).
– Pic à 1,54 ppm (singulet, 3H).
– Pic à 2,63 ppm (singulet, 3H).
– Pics à 4,2 ppm (quadruplet, 2H, J = 7 Hz).

*Spectre IR* $(CHCl_3)$

Absorption à 2222 $cm^{-1}$ (CN) et 1730 $cm^{-1}$ (CO).

*Exemple 2:*

*2,2-Diméthyl-3-éthoxycarbonyl-cyclopropane-1-carbonitrile.*

On met en suspension dans 5,2 g de diméthylformamide 0,094 g d'hydrure de sodium (à 60% dans l'huile). On ajoute à 0- + 5° C 0,5 g d'acide 2,2-diméthyl-3-éthoxycarbonyl-1-cyanocyclopropane-1-carboxylique et maintient sous agitation jusqu'à la fin du dégagement d'hydrogène. On ajoute ensuite 0,128 g d'eau et chauffe à 130° C sous atmosphère inerte pendant 5 h. On refroidit le mélange, le verse dans un mélange de 25 g de glace et 200 $cm^3$ d'éther. On agite, décante, réextrait à l'éther, réunit les phases éthérées, les lave à l'eau salée, les sèche et évapore le solvant. On obtient 0,39 g de produit attendu qui, par analyse par chromatographie en phase gazeuse, se révèle être un mélange renfermant 94% d'isomère cis et 6% d'isomère trans. Le mélange obtenu peut être séparé par chromatographie sur silice en

éluant au mélange hexane/acétate d'éthyle (80/20). On obtient ainsi:

*a) l'isomère cis* attendu cristallisé F = 69° C.

*Spectre RMN* ($CCl_4$)

– Pic à 1,27 ppm (singulet, $CH_3$).
– Pics à 1,31 ppm (triplet, $CH_3$, J = 7 Hz).
– Pic à 1,42 ppm (singulet, $CH_3$).
– Pics à 1,58-1,78 ppm (doublets, 2 CH, J = 8 Hz).
– Pics à 4,18 ppm (quadruplet, $CH_3$, J = 7 Hz).

*Spectre IR* ($CCl_4$)
Absorption à 2242 $cm^{-1}$ (CN) et 1730 $cm^{-1}$ (CO).

*b) l'isomère trans*

*Spectre RMN* ($CCl_4$)

– Pic à 1,29 ppm (singulet, $CH_3$).
– Pics à 1,3 ppm (triplet, $CH_3$, J = 7 Hz).
– Pic à 1,47 ppm (singulet, $CH_3$).
– Pics à 1,88-2,0 ppm (doublets 2 CH, J = 5 Hz).
– Pics à 4,14 ppm (quadruplet, $CH_2$, J = 7 Hz).

*Spectre IR* ($CCl_4$)
Absorption à 2237 $cm^{-1}$ (CN) et 1733 $cm^{-1}$ (CO).

*Exemple 3:*

*2,2-Diméthyl-3-éthoxycarbonylcyclopropane-1-carbonitrile.*

On opère comme indiqué à l'exemple 2, en utilisant 0,237 g de soude à 40%, au lieu de l'hydrure de sodium et des 0,128 g d'eau. On obtient le produit attendu avec un rendement de 98%, sous la forme d'un mélange renfermant 89% d'isomère cis, 11% d'isomère trans, que l'on peut séparer comme décrit à l'exemple 2.

*Exemple 4:*

*2,2-Diméthyl-3-éthoxycarbonylcyclopropane-1-carbonitrile.*

On opère comme indiqué à l'exemple 2, en utilisant 5,6 g de diméthylsulfoxyde au lieu du diméthylformamide. On obtient le produit attendu avec un rendement de 95%, sous la forme d'un mélange renfermant 88% d'isomère cis et 12% d'isomère trans, que l'on peut séparer comme décrit à l'exemple 2.

*Exemple 5:*

*2,2-Diméthyl-3-éthoxycarbonylcyclopropane-1-carbonitrile.*

On maintien sous agitation et sous atmosphère inerte pendant 15 h un mélange de 2 g de 2,2-diméthyl-3-éthoxycarbonyl-1-cyanocyclopropane-1-carboxylate d'éthyle et 4,71 g de potasse éthanolique à 10%. On chasse ensuite l'éthanol sous pression réduite et lave le sel de potassium obtenu à l'éther. On ajoute 5,2 g de diméthylformamide, 0,128 g d'eau et chauffe à 130° C sous atmosphère inerte pendant 5 h. On refroidit le mélange, le verse dans un mélange de 25 g de glace et 200 $cm^3$ d'éther. On agite, décante, réextrait à l'éther, réunit les phases éthérées, les lave à l'eau salée, les sèche et évapore le solvant. On obtient 1,23 g de produit attendu renfermant 90% d'isomère cis et 10% d'isomère trans, que l'on peut séparer comme décrit à l'exemple 2.

*Exemple 6:*

*2,2-Diméthyl-3-éthoxycarbonylcyclopropane-1-carbonitrile.*

On opère comme indiqué à l'exemple 5, en remplaçant la potasse éthanolique à 10% par de la soude éthanolique à 7%. On obtient le produit attendu avec un rendement de 88%, sous la forme d'un mélange renfermant 93% d'isomère cis et 7% d'isomère trans, que l'on peut séparer comme décrit à l'exemple 2.

**Revendications** pour les Etats contractants BE, CH, DE, GB, IT, LI, LU, NL, SE

1. Nouveaux dérivés de l'acide cyclopropane-1-carboxylique de formule (I):

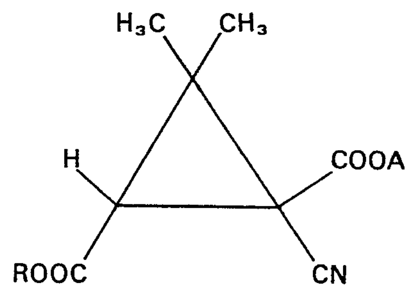
(I)

dans laquelle les groupements CN et COOR sont en position cis, A représente un atome d'hydrogène ou un atome de métal alcalin et R représente un radical alcoyle renfermant de 1 à 4 atomes de carbone.

2. L'acide 2,2-diméthyl-3-éthoxycarbonyl-1-cyanocyclopropane-1-carboxylique selon la revendication 1, dans lequel les groupements cyano et éthoxycarbonyl sont en position cis, et ses sels de sodium et de potassium.

3. Procédé de préparation des dérivés de formule (I), tels que définis à la revendication 1, caractérisé en ce que l'on soumet un dérivé de formule (II):

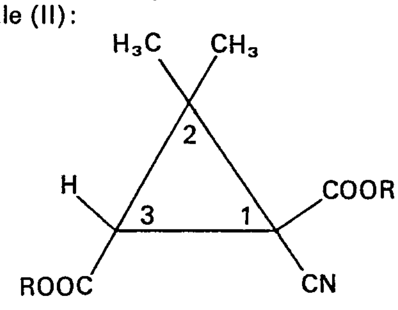
(II)

dans laquelle les groupements COOR sur le sommet 3 et CN sur le sommet 1 sont en position cis et R est tel que défini à la revendication 1, à l'action d'un agent de saponification alcalin, en milieu hydroalcoolique, pour obtenir un dérivé de formule (I) dans laquelle A représente un atome de métal alcalin, que l'on soumet, le cas échéant, à l'action d'un agent acide, pour obtenir un dérivé

répondant à la formule (I), dans laquelle A représente un atome d'hydrogène, que l'on salifie, le cas échéant, par action d'une base alcaline, pour obtenir un dérivé répondant à la formule (I) dans laquelle A représente un atome de métal alcalin.

4. Procédé selon la revendication 3, caractérisé en ce que l'agent de saponification est choisi dans le groupe constitué par la soude et la potasse et en ce que l'on opère en milieu hydroéthanolique ou hydrométhanolique.

5. Application des dérivés de formule (I) tels que définis à la revendication 1, à la préparation des dérivés de formule (III):

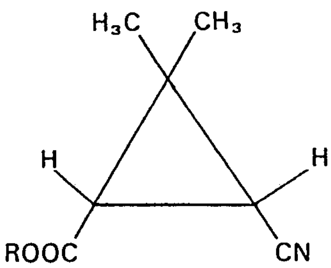

(III)

de configuration cis, dans laquelle R représente un radical alcoyle renfermant de 1 à 4 atomes de carbone, caractérisée en ce que l'on chauffe un dérivé de formule (I):

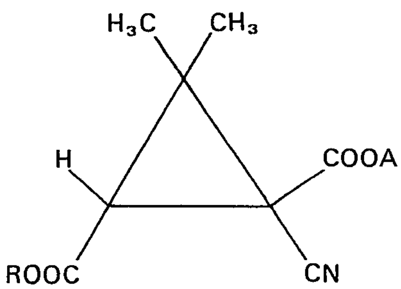

(I)

dans laquelle A représente un atome de métal alcalin, au sein d'un solvant aprotique, à une température de 100 à 150° C, en présence de 1 à 4 mol d'eau par mole de dérivé de formule (I), pour obtenir un dérivé de formule (III), de configuration cis, attendu.

6. Application selon la revendication 5, caractérisée en ce que A représente un atome de sodium ou de potassium.

7. Application selon l'une des revendications 5 ou 6, caractérisée en ce que le solvant aprotique est choisi dans le groupe constitué par le diméthylformamide, le diméthylsulfoxyde et le diméthylacétamide.

8. Application selon l'une des revendications 5, 6 ou 7, caractérisée en ce que le chauffage est effectué à une température de 120 à 140° C.

9. Application selon l'une des revendications 5 à 8, caractérisée en ce que le chauffage est effectué pendant une durée de 2 à 6 h.

10. Application selon l'une des revendications 5 à 9, caractérisée en ce que l'on utilise au départ un dérivé de formule (I), dans laquelle A représente un atome de sodium ou de potassium, obtenu directement à l'issue de la saponification par la soude ou la potasse du dérivé de formule (II), telle que définie à la revendication 3.

**Revendications** pour l'Etat contractant: AT

1. Procédé de préparation des dérivés de formule (III):

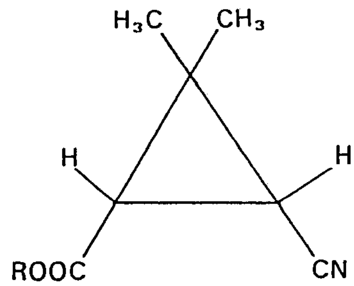

(III)

de configuration cis, dans laquelle R représente un radical alcoyle renfermant de 1 à 4 atomes de carbone, caractérisé en ce que l'on soumet un dérivé de formule (II)

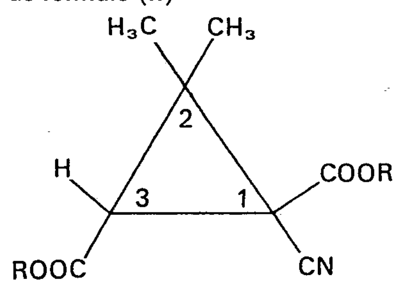

(II)

dans laquelle les groupements COOR sur le sommet 3 et CN sur le sommet 1 sont en position cis et R est tel que défini ci-dessus, à l'action d'un agent de saponification alcalin, en milieu hydroalcoolique, pour obtenir un dérivé de formule (I):

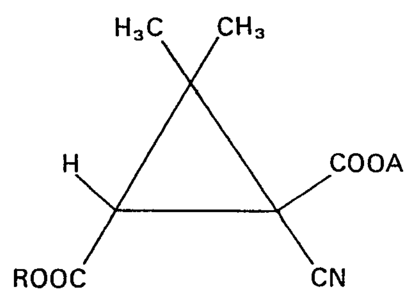

(I)

dans laquelle les groupements CN et COOR sont en position cis, A représente un atome de métal alcalin et R est défini comme précédemment, dérivé de formule (I) que, le cas échéant, l'on soumet à l'action d'un agent acide, pour obtenir l'acide correspondant, puis à l'action d'une base alcaline, pour obtenir un dérivé de formule (I), telle que définie précédemment, puis chauffe ledit dérivé de formule (I), au sein d'un solvant aprotique, à une température de 100 à 150° C, en présence de 1 à 4 mol d'eau par mole de dérivé de formule (I), pour obtenir un dérivé de formule (III), de configuration cis attendu.

2. Procédé selon la revendication 1, caractérisé en ce que l'on utilise au départ un dérivé de formule (II) dans laquelle R représente un radical éthyle.

3. Procédé selon l'une des revendications 1 ou 2, caractérisé en ce que:

— l'agent de saponification est choisi dans le groupe constitué par la soude et la potasse;

– l'on opère en milieu hydroéthanolique ou hydrométhanolique;

– la base alcaline est choisie dans le groupe constitué par la soude et la potasse;

– le solvant aprotique est choisi dans le groupe constitué par le diméthylformamide, le diméthylsulfoxyde et le diméthylacétamide;

– le chauffage est effectué à une température de 120 à 140° C;

– le chauffage est effectué pendant une durée de 2 à 6 h.

4. Procédé d'utilisation des dérivés de formule (I):

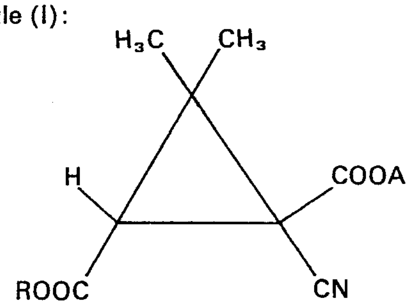

(I)

dans laquelle les groupements CN et COOR sont en position cis, A représente un atome de métal alcalin et R représente un radical alcoyle renfermant de 1 à 4 atomes de carbone, caractérisé en ce que l'on chauffe ledit dérivé de formule (I), au sein d'un solvant aprotique, à une température de 100 à 150° C, en présence de 1 à 4 mol d'eau par mole de dérivé de formule (I), pour obtenir un dérivé de formule (III)

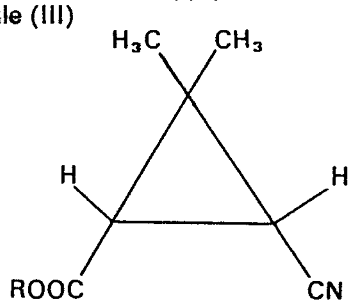

(III)

de configuration cis, dans lequel R est défini comme précédemment.

**Patentansprüche** für die Vertragsstaaten: BE, CH, LI, DE, GB, IT, LU, NL, SE

1. Neue Derivate der Cyclopropan-1-carbonsäure der Formel I

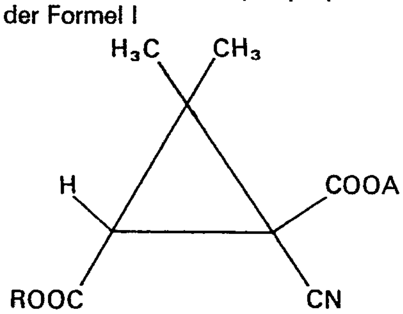

(I)

worin die Gruppen CN und COOR sich in cis-Stellung befinden, A ein Wasserstoffatom oder ein Alkalimetallatom bedeutet und R einen Alkylrest mit 1 bis 4 Kohlenstoffatomen darstellt.

2. 2,2-Dimethyl-3-äthoxycarbonyl-1-cyanocyclopropan-1-carbonsäure gemäss Anspruch 1, worin die Cyano- und Äthoxycarbonylgruppen sich in cis-Stellung befinden und ihre Natrium- und Kaliumsalze.

3. Verfahren zur Herstellung der Derivate der Formel I gemäss Anspruch 1, dadurch gekennzeichnet, dass man ein Derivat der Formel II

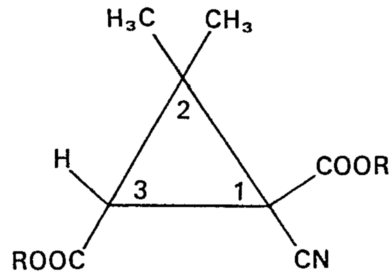

(II)

worin die Gruppe COOR in 3-Stellung und die Gruppe CN in 1-Stellung sich in cis-Stellung befinden und R wie in Anspruch 1 definiert ist, der Einwirkung eines Alkalischen Verseifungsmittels in wässerig-alkoholischem Milieu unterzieht, um ein Derivat der Formel I zu erhalten, worin A ein Alkalimetallatom bedeutet, welches man gegebenenfalls der Einwirkung eines sauren Mittels unterzieht, um ein der Formel I entsprechendes Derivat zu erhalten, worin A ein Wasserstoffatom bedeutet, welches man gegebenenfalls durch Einwirken einer Alkalibase in ein Salz überführt, um ein der Formel I entsprechendes Derivat zu erhalten, worin A ein Alkalimetallatom bedeutet.

4. Verfahren gemäss Anspruch 3, dadurch gekennzeichnet, dass das Verseifungsmittel ausgewählt wird unter Natronlauge und Kalilauge und dass man in wässerig-äthanolischem oder wässerig-methanolischem Milieu arbeitet.

5. Verwendung der Derivate der Formel I gemäss Anspruch I zur Herstellung von Derivaten der Formel III

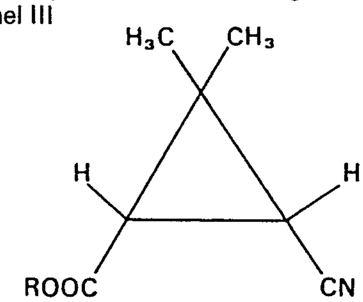

(III)

mit cis-Konfiguration, worin R einen Alkylrest mit 1 bis 4 Kohlenstoffatomen bedeutet, dadurch gekennzeichnet, dass man ein Derivat der Formel I

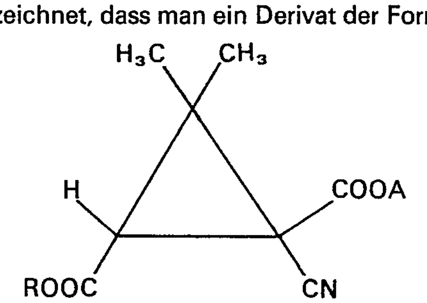

(I)

worin A ein Alkalimetallatom bedeutet, in dem Medium eines aprotischen Lösungsmittels auf

eine Temperatur von 100 bis 150° C in Gegenwart von 1 bis 4 mol Wasser/mol Derivat der Formel I erhitzt, um ein erwartetes Derivat der Formel III mit cis-Konfiguration zu erhalten.

6. Verwendung gemäss Anspruch 5, dadurch gekennzeichnet, dass A ein Natrium oder Kaliumatom bedeutet.

7. Verwendung gemäss einem der beiden Ansprüche 5 oder 6, dadurch gekennzeichnet, dass das aprotische Lösungsmittel unter Dimethylformamid, Dimethylsulfoxid und Dimethylacetamid ausgewählt wird.

8. Verwendung gemäss einem der Ansprüche 5, 6 oder 7, dadurch gekennzeichnet, dass das Erhitzen auf eine Temperatur von 120 bis 140° C durchgeführt wird.

9. Verwendung gemäss einem der Ansprüche 5 bis 9, dadurch gekennzeichnet, dass das Erhitzen während einer Zeitdauer von 2 bis 6 h durchgeführt wird.

10. Verwendung gemäss einem der Ansprüche 5 bis 9, dadurch gekennzeichnet, dass man von einem Derivat der Formel I ausgeht, worin A ein Natrium- oder Kaliumatom bedeutet, das direkt am Ende der Verseifung des Derivats der Formel II wie in Anspruch 3 definiert mit Natronlauge oder Kalilauge erhalten wird.

**Patentansprüche** für den Vertragsstaat: AT

1. Verfahren zur Herstellung von Derivaten der Formel III

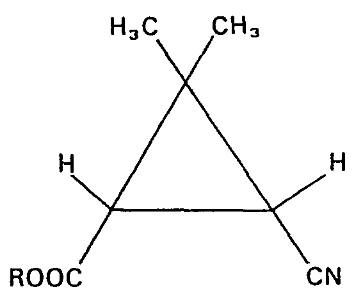

(III)

mit cis-Konfiguration, worin R einen Alkylrest mit 1 bis 4 Kohlenstoffatomen bedeutet, dadurch gekennzeichnet, dass man ein Derivat der Formel II

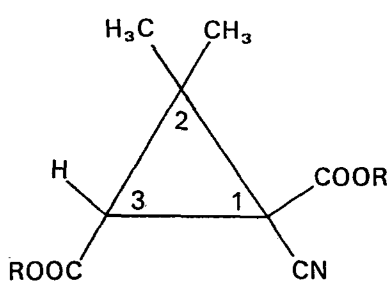

(II)

worin die Gruppe COOR in 3-Stellung und die Gruppe CN in 1-Stellung sich in cis-Stellung befinden und R wie vorstehend definiert ist, der Einwirkung eines alkalischen Verseifungsmittels in wässerig-alkoholischem Milieu unterzieht, um ein Derivat der Formel I

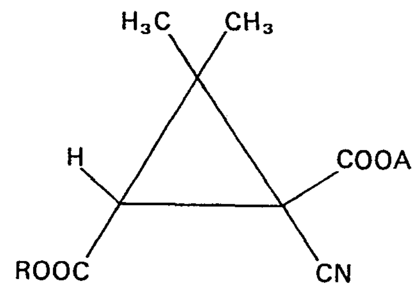

(I)

zu erhalten, worin die Gruppen CN und COOR sich in cis-Stellung befinden, A ein Alkalimetallatom bedeutet und R wie vorstehend definiert ist, das Derivat der Formel I gegebenenfalls der Einwirkung eines sauren Mittels, um die entsprechende Säure, und danach der Einwirkung einer alkalischen Base unterzieht, um ein Derivat der Formel I, wie vorstehend definiert, zu erhalten, danach dieses Derivat der Formel I in dem Medium eines aprotischen Lösungsmittels auf eine Temperatur von 100 bis 150° C in Gegenwart von 1 bis 4 mol Wasser/mol Derivat der Formel I erhitzt, um ein erwartetes Derivat der Formel III mit cis-Konfiguration zu erhalten.

2. Verfahren gemäss Anspruch 1, dadurch gekennzeichnet, dass man von einem Derivat der Formel II ausgeht, worin R einen Äthylrest bedeutet.

3. Verfahren gemäss einem der beiden Ansprüche 1 oder 2, dadurch gekennzeichnet, dass

das Verseifungsmittel unter Natronlauge und Kalilauge ausgewählt wird,

man in wässerig-äthanolischem oder wässerig-methanolischem Milieu arbeitet,

die alkalische Base unter Natronlauge und Kalilauge ausgewählt wird,

das aprotische Lösungsmittel unter Dimethylformamid, Dimethylsulfoxid und Dimethylacetamid ausgewählt wird,

das Erhitzen auf eine Temperatur von 120 bis 140° C durchgeführt wird, und

das Erhitzen während einer Zeitdauer von 2 bis 6 h durchgeführt wird.

4. Verfahren zur Verwendung der Derivate der Formel I

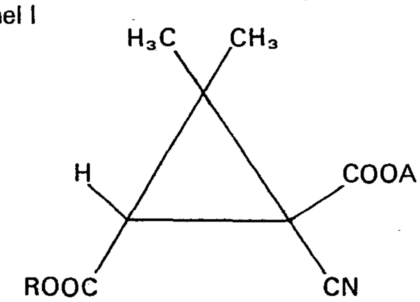

(I)

worin die Gruppen CN und COOR sich in cis-Stellung befinden, A ein Alkalimetallatom bedeutet und R einen Alkylrest mit 1 bis 4 Kohlenstoffatomen darstellt, dadurch gekennzeichnet, dass man das Derivat der Formel I in dem Medium eines aprotischen Lösungsmittels auf eine Temperatur von 100 bis 150° C in Gegenwart von 1 bis 4 mol Wasser/mol Derivat der Formel I erhitzt, um ein Derivat der Formel III

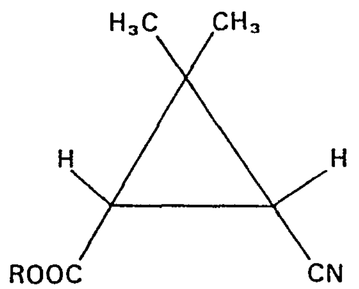

(III)

mit cis-Konfiguration zu erhalten, worin R wie vorstehend definiert ist.

**Claims** for the contracting States: BE, CH, LI, DE, GB, IT, LU, NL, SE

1. New derivatives of cyclopropane-1-carboxylic acid with the formula (I):

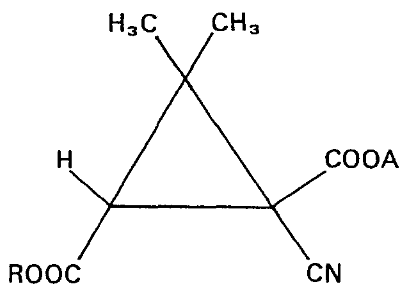

(I)

in which CN and COOR groups are in cis position, A represents a hydrogen atom or an alkali metal atom and R represents an alkyl radical containing from 1 to 4 carbon atoms.

2. 2,2-dimethyl 3-ethoxycarbonyl-1-cyano cyclopropane-1-carboxylic acid according to claim 1, in which the cyano and ethoxycarbonyl groups are in cis position, and its salts of sodium and potassium.

3. Process for the preparation of the derivatives with formula (I), as defined in claim 1, characterized in that the derivatives with formula (II):

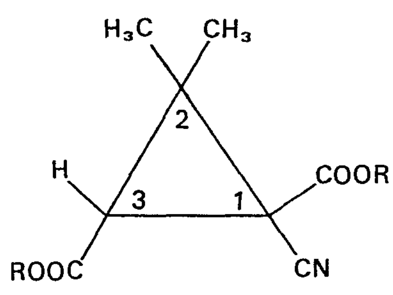

(II)

in which the groups COOR on apex 3 and CN on apex 1 are in cis position and R is as defined in claim 1, is submitted to the action of an alkaline saponification agent, in a water-alcohol medium, so as to obtain a derivative with the formula (I) in which A represents an alkali metal atom, which if necessary is submitted to the action of an acid agent, so as to obtain a derivative corresponding to the formula (I), in which A represents a hydrogen atom, which if necessary is salified by the action of alkaline base, so as to obtain a derivative corresponding to the formula (I) in which A represents an alkali metal atom.

4. Process according to claim 3, characterized in that the saponification agent is chosen from the group constituted by sodium hydroxide and potassium hydroxide and in that the operation is carried out in a water-ethanol or water-methanol medium.

5. Application of the derivatives with the formula (I) as defined in claim 1 for the preparation of derivatives with the formula (III):

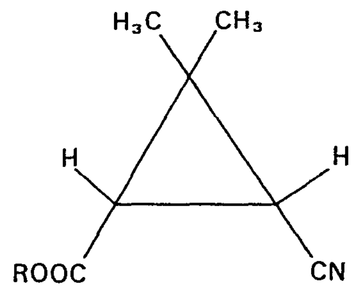

(III)

with cis configuration, in which R represents an alkyl radical containing from 1 to 4 carbon atoms, characterized in that a derivative with the formula (I):

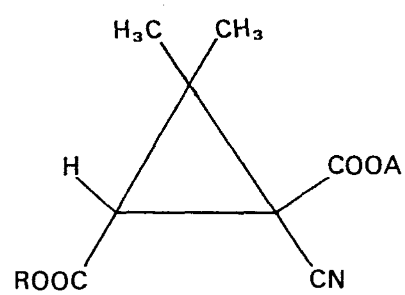

(I)

in which A represents an alkali metal atom is heated in an aprotic solvent at a temperature of 100 to 150° C, in the presence of 1 to 4 mol of water per mole of the derivative with the formula (I) so as to obtain a derivative with the formula (III), with the expected cis configuration.

6. Application according to claim 5, characterized in that A represents a sodium or potassium atom.

7. Application according to claim 5 or 6, characterized in that the aprotic solvent is chosen from the group constituted by dimethylformamide, dimethylsulphoxide and dimethylacetamide.

8. Application according to claim 5, 6 or 7, characterized in that the heating is carried out at a temperature of 120 to 140° C.

9. Appliction according to any one of the claims 5 to 8, characterized in that the heating is carried out for a period of 2 to 6 h.

10. Application according to any one of the claims 5 to 9, characterized in that at the start a derivative with the formula (I) is used in which A represents a sodium or a potassium atom, obtained directly resulting from the saponification by sodium or potassium hydroxide of the derivative with the formula (II), as defined in claim 3.

**Claims** for the contracting State: AT

1. Process for the preparation of the derivatives with the formula (III):

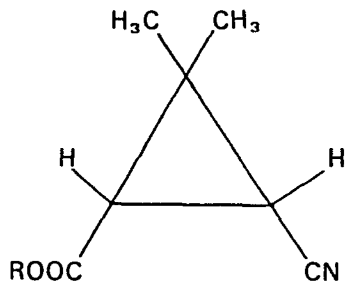

(III)

of cis configuration in which R represents an alkyl radical containing from 1 to 4 carbon atoms, characterized in that a derivative with the formula (II)

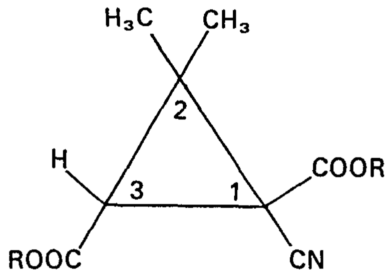

(II)

in which the COOR group on the apex 3 and CN on the apex 1 are in cis position and R is as defined above, is submitted to the action of an alkaline saponification agent in a water-alcohol medium so as to obtain a derivative with the formula (I)

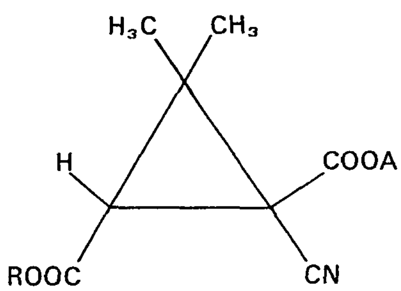

(I)

in which the CN and COOR groups are in cis position, A represents an alkali metal atom and R is defined as previously, which derivative with the formula (I), if necessary, is submitted to the action of an acid agent so as to obtain the corresponding acid, then to the action of an alkaline base, so as to obtain a derivative with the formula (I) as previously described then the said derivative with the formula (I) is heated in an aprotic solvent at a temperature of 100 to 150° C in the presence of 1 to 4 mol of water per mole of derivative with the formula (I), so as to obtain a derivative with the formula (III) with the expected cis configuration.

2. Process according to claim 1, characterized in that at the start a derivative with the formula (II) in which R represents an ethyl radical is utilized.

3. Process according to claim 1 or 2, characterized in that—

– the saponification agent is chosen from the group constituted by sodium hydroxide and potassium hydroxide;

– the operation is carried out in a water-ethanol or water-methanol medium;

– the alkaline base is chosen from the group constituted by sodium hydroxide and potassium hydroxide;

– the aprotic solvent is chosen from the group constituted by dimethylformamide, dimethylsulphoxide and dimethylacetamide;

– the heating is carried out at a temperature of 120 to 140° C, and

– the heating is carried out for a period of 2 to 6 h.

4. Process for the utilization of derivatives with the formula (I)

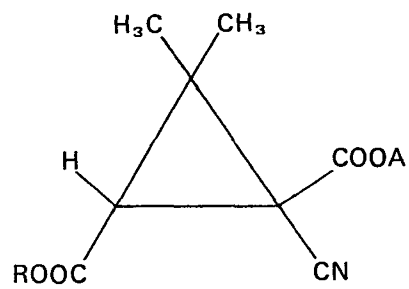

(I)

in which the groups CN and COOR are in cis position, A represents an alkali metal atom and R represents an alkyl radical containing from 1 to 4 carbon atoms, characterized in that the said derivative with the formula (I) is heated in an aprotic solvent at a temperature of 100 to 150° C, in the presence of 1 to 4 mol of water per mole of derivative with the formula (I), so as to obtain a derivative with the formula (III)

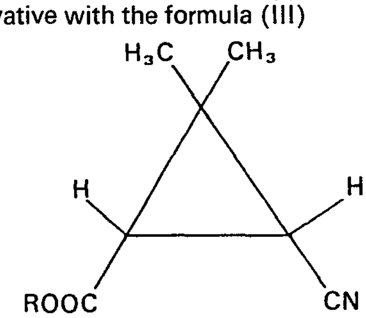

(III)

of cis configuration in which R is defined as previously.